# EUROPÄISCHE PATENTSCHRIFT

(11) **EP 1 350 375 B1**
(45) Veröffentlichungstag und Bekanntmachung des Hinweises auf die Patenterteilung: **30.03.2011**
(21) Anmeldenummer: 02702214.4
(22) Anmeldetag: 09.01.2002
(51) Int. Cl.: H04L 29/06

(54) **VORRICHTUNG ZUR FÄLSCHUNGSSICHEREN IDENTIFIZIERUNG, VERIFIZIERUNG UND AUTORISIERUNG VON NETZWERKANWENDUNGEN**
DEVICE FOR THE FORGERY-PROOF IDENTIFICATION, VERIFICATION AND AUTHORISATION OF NETWORK APPLICATIONS
DISPOSITIF D'IDENTIFICATION ANTI-FALSIFICATION, DE VERIFICATION ET D'AUTORISATION D'APPLICATIONS SUR RESEAU

(30) Priorität: 10.01.2001 DE 10101321; 23.01.2001 DE 10102979
(43) Veröffentlichungstag der Anmeldung: 08.10.2003
(73) Patentinhaber: Valentin, Torsten, 59457 Werl (DE)
(72) Erfinder: Valentin, Torsten, 59457 Werl (DE)
(86) Internationale Anmeldenummer: PCT/DE2002/000090
(87) Internationale Veröffentlichungsnummer: WO 2002/056153

(56) Entgegenhaltungen:
- WO-A-00/79432
- US-A- 5 835 726
- US-A- 5 923 756

## Beschreibung

Die Erfindung betrifft ein Verfahren gemäß Anspruch 1.

Die Erfindung ist ein Verfahren zur Absicherung von Rechnern (PCs) mit Anschluss an ein öffentliches Netzwerk (z.B. Internet) zum Zweck der kontrollierten Unterbindung sowie der Überprüfung der Netzwerkverbindungen ins öffentliche Netz. Die Erfindung ist eine fälschungssichere Vorrichtung, die Clients (das Programm, welches einen Dienst aus dem internet nutzen möchte, z.B. Web-Browser) auf dem Rechner des Anwenders Identifiziert, verifiziert und gegebenenfalls autorisiert. Nur so überprüfte Clients, die durch ein Schlüsselverfahren in einer Liste auf einem zuständigen fälschungssicheren Server autorisiert werden, werden für den Aufbau einer Verbindung über das hierfür benötigte Protokoll (z.B. http und https) ins Internet freigeschaltet.

### Stand der Technik

Stand der Technik ist es, Rechner, die an das Internet angeschlossen sind, logisch betrachtet hinter einer evtl. mehrstufigen Firewall (Rechner mit auf definierten Regeln basierender Weiterieitungsfunktion für IP-Pakete) unterzubringen. Um nun Dienste des Internets auf den hinter der Firewall befindlichen Systemen nutzen zu können, müssen Regeln in der Firewall definiert werden, die bestimmte IP Verkehre zulassen. Um den Anwendern im geschützten Bereich hinter der Firewall überhaupt die Möglichkeit zu geben, einen Dienst des Internets nutzen zu können (denn das ist ja der Sinn eines Anschlusses an das Internet), müssen Regeln in der Firewall definiert werden, die die gewünschten IP-Verkehre zulassen. Hierbei werden dem Stand der Technik entsprechend immer Möglichkeiten geschaffen, die Firewall zu passieren, denn der kontrollierte durch Regeln definierte IP-Verkehr ins Internet ist genau der Sinn einer Firewall. Exemplarisch betrachten wir hier das Übertragen von Web-Seiten (html Dateien über das http oder https Protokoll). Hierfür werden in der Regel Zugriffe auf den Port 80 (http) freigeschaltet, um die Webseiten externer im Internet befindlicher Server abrufen zu können.

Ein Angreifer kann nun leicht ein Programm schreiben, welches, einmal auf dem lokalen Rechner des Anwenders gestartet, Daten vom Rechner oder aus der angeschlossenen Netzwerkumgebung ausspionieren kann. Tarnt der Angreifer dieses Programm z.B. durch Vortäuschung einer echten Anwendung, läuft das Programm unbemerkt im Hintergrund des Rechners des Anwenders (Trojaner).

Um die so ausspionierten Daten nun an den Angreifer zu übermitteln, kann der Trojaner keinen normalen Weg über eine TCP-IP Verbindung über ein eigenes Protokoll und den dazugehörigen Port nutzen, weil eine Firewall dies erstens unterbinden würde, und zweitens der Versuch von der Firewall bemerkt würde. Stattdessen kann der Trojaner http Anfragen an die URL (Adresse) eines vom Angreifer im Internet modifizierten Webserver stellen. Da dies eine erlaubte Standardanwendung ist und eine Filterregel in der Firewall existiert, die explizit diese Art der Verbindung erlaubt, kann der Trojaner seine ausspionierten Daten innerhalb der im http Protokoll enthaltenen Möglichkeiten der Datenübermittlung unterbringen. Größere Datenpakete würden in mehrere http Requests fragmentiert. Der modifizierte WebServer des Angreifers würde nun Antworten generieren (z.B. dynamisch erzeugte html Dateien), die wiederum Steuerungscodes enthalten können, die der Trojaner auswerten kann. Da die Anfragen an den modifizierten Web-Server über das explizit erlaubte http- Protokoll laufen und die Antworten ganz normale Web-Seiten (html- Dateien) sind, greift die Firewall nicht. Es ist der Firewall nicht möglich zu unterscheiden, ob es sich bei der Anfrage um eine gewünschte Verbindung handeit, die ein Benutzer auf seinem Rechner über seinen Web-Browser initiiert hat, oder ob es sich um Anfragen von einem Trojaner handelt, der sich auf dem Rechner des Anwenders befindet und ausspionierte Daten übermittelt, da eine Identifikation des Client Programms (z.B. ein Web-Browser) nicht möglich ist. Die beschriebene Möglichkeit der Datenspionage ist auch dann möglich, wenn die Firewall keinen direkten Zugriff auf Web- Seiten im Internet erlaubt, sondern den Weg über einen Proxy- Server wählt. Die Möglichkeit der bidirektionalen Datenübertragung besteht somit bei nahezu allen Diensten, die in der Firewall für das Internet freigeschaltet sind (z.B. DNS, E-Mail, News etc.). Nach dem derzeitigen Stand der Technik kann ein Angreifer ein Programm (wie oben für das http Protokoll exemplarisch gezeigt) schreiben, welches gezielt nach den freigeschalteten Diensten in der Firewall sucht und diese dann zur Übertragung ausspionierter Daten nutzt, indem es Daten im Protokoll der freigeschalteten Anwendung an einen hierfür im internet modifizierten Server übermittelt. WO 99/45454 offenbart ein Verfahren gemäß Oberbegriff des Anspruchs 1.

Dies ist Stand der Technik und unabhängig von der eingesetzten Software, Betriebssystem oder Firewall.

### Beispiel gemäß Zeichnung

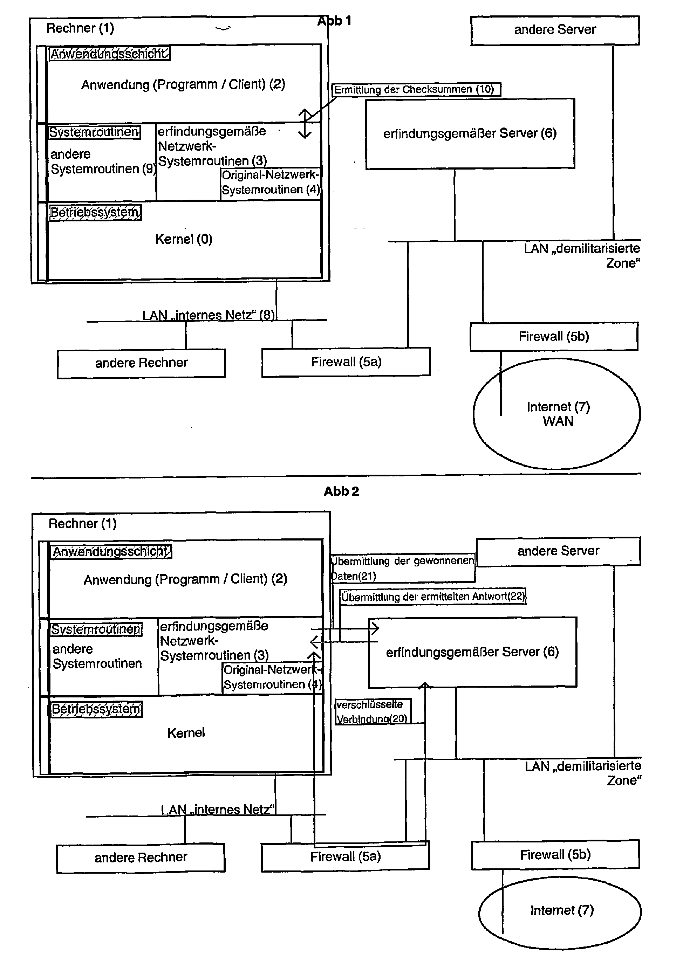

Die in Klammern angegebenen Ziffern bezeichnen die Komponenten einer möglichen Realisation der Erfindung, die in den Abbildungen 1-3 beispielhaft gezeigt wird.

### Das Verfahren

verbindungen eines Programmes (Clients) (Abb.1 Ziff. 2) zu anderen Netzwerksystemen (Abb:1 Ziff. 8) werden immer an die zuständige Systemroutine (Abb. 1 Ziff 3) des darunter liegenden Betriebssystems (Abb.1 Ziff. 0, 4 und 9) übergeben. Die für Netzwerkverbindungen zuständige Systemroutine (Abb.1 Ziff. 4) des zu schützenden Systems (Abb.1 Ziff. 1) wird gegen die erfindungsgemäße Systemroutine (Abb. 1 Ziff. 3) ausgetauscht. Die original-Systemroutinen können optional an anderer Stelle im Betriebssystem zur weiteren Verwendung vorhanden sein, es ist lediglich sicherzustellen, dass die sie nicht von anderen Programmen als der erfindungsgemäßen systemroutinen zur Verwendung von Netzwerkverbindungen herangezogen werden können.

Der Anwender startet nun ein Programm (den Client, Abb. 1 Ziff. 2), welches Daten mit dem Internet (Abb. 1 Ziff. 7) austauschen soll (z.B. Netscape). Der Client muss nun auf die Systemroutine (Abb. 1 Ziff. 3) des zugrunde liegenden Betriebssystems zugreifen, um eine Netzwerkverbindung aufzubauen. In diesem Moment startet der Client also automatisch die erfindungsgemäße Systemroutine. Diese ermittelt die Identität des sie aufrufenden Programms (des Clients), erstellt seine Checksumme und die von sich selbst (Abb. 1 Ziff. 10). Jetzt baut die erfindungsgemäße Systemroutine eine verschlüsselte Verbindung zum erfindungsgemäßen Server auf (Abb. 2 Ziff 20). Das verwendete Verschlüsselungsverfahren und Datenformat ist hierbei ebenso wie beim Verfahren zur Ermittlung der Checksumme unerheblich, solange es nach dem Stand der Technik als sicher gilt. Über diese verschlüsselte Verbindung übermittelt (Abb. 2 Ziff 21) die erfindungsgemäße Systemroutine nun die ermittelten Daten an den erfindungsgemäßen Server (Abb. 2 Ziff. 6). Der erfindungsgemäße Server überprüft die so erhaltenen Daten anhand seiner internen Liste. Der erfindungsgemäße Server führt eine positiv- Liste der als sicher geltenden Clients und deren Checksummen, ebenso wie die Checksumme der erfindungsgemäßen Systemroutine. Welche Clients erlaubt sind und somit als sicher gelten können, kann der Administrator des erfindungsgemäßen Servers somit leicht selbst bestimmen.

Stimmt eine der Checksummen nicht, ist davon auszugehen, dass das Programm (Abb. 2 Ziff. 2), dessen Checksumme nicht stimmt, modifiziert wurde. In diesem Falle kann dem Programm nicht mehr getraut werden, es gilt als potentiell unsicher und der erfindungsgemäße Server (Abb. 2 Ziff. 6) wird der erfindungsgemäßen Systemroutine (Abb. 2 Ziff. 3) den Zugriff dieses Programms und/oder (im Falle des Fehlschlagens der Checksumme der erfindungsgemäßen Systemroutine) der offenbar modifizierten erfindungsgemäßen Systemroutine selbst verweigern. Dies geschieht durch die Übermittlung einer Ablehnung (Abb. 2 Ziff. 22) an die erfindungsgemäße Systemroutine. Im Falle der Ablehnung wird die Systemroutine eine Fehlermeldung an den Client übermitteln und sich selbst schließen; ebenso wird der erfindungsgemäße Server die verschlüsselte Verbindung zur erfindungsgemäßen Systemroutine schließen.

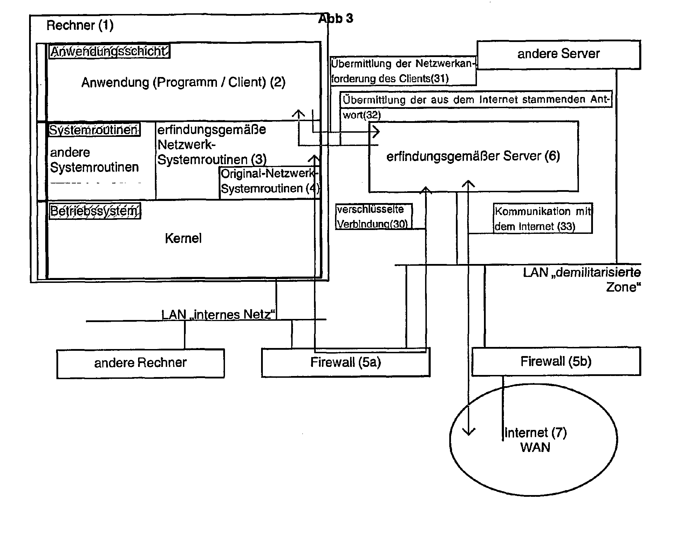

Stimmen die Checksummen und ist der Client auf der Liste der erlaubten Anwendungen für das verwendete Protokoll geführt, so übermittelt (ebenso Abb. 2 Ziff. 22) der erfindungsgemäße Server eine Bestätigung an die erfindungsgemäßen Systemroutinen. Nach Erhalt der Bestätigung durch den erfindungsgemäßen Server leitet die erfindungsgemäße Systemroutine alle kommenden Anfragen des Clients durch die verschlüsselte Verbindung (Abb. 3 Ziff. 30)zum erfindungsgemäßen Server weiter (Abb. 3 Ziff. 31). Dieser wird die Anfrage dann an das eigentliche Zielsystem im Internet (Abb. 3 Ziff. 7) stellen. Die durch das Zielsystem im Internet generierte Antworten kommen zurück zum erfindungsgemäßen Server. Dieser führt eine Liste der Verbindungen und kann somit ermitteln, welcher Anfrage eines Clients das erhaltene Antwortpaket entspricht. Das so ermittelte System (der Client auf dem Rechner des Anwenders) erhält (Abb. 3 Ziff. 32) somit die vom Weiterleitungs-Server eingeholte Antwort.

### Die Systemroutinen

Die erfindungsgemäßen Systemroutinen sind modifizierte (speziell angepasst auf das jeweilig zugrunde liegende Betriebssystem) Funktionsaufrufe der für Netzwerkkommunikation zuständigen Original - Systemroutinen des jeweils zugrunde liegenden Betriebssystems (z.B. winsock.dII bei Windows-Betriebssystemen). Sie ersetzen die original- Systemroutinen, die für die Netzwerkkommunikation zuständig sind. Sie bieten grundsätzliche alle Funktionen, die die Original-Systemroutinen des Betriebssystems auch bieten, sind allerdings in der Lage, Netzwerkverbindungen zu tunneln und zu entscheiden, ob und wie eine Netzwerkverbindung hergestellt werden kann. Außerdem führen Sie zusätzliche erfindungsgemäße Operationen durch.

Systemroutinen werden grundsätzlich von einem Client aufgerufen, u.a. um die Verbindung zum Zielsystem herzustellen. Einmal aufgerufen, führen die erfindungsgemäßen Systemroutinen folgende Schritte durch:
- Identifikation des die Systemroutine aufrufenden Programms (Client)
- Erstellung eines Fingerabdrucks des Client (Bilden der Checksumme)
- Erstellung eines Fingerabdrucks der Systemroutine selbst (Bilden der Checksumme von sich selbst)
- Aufbau einer verschlüsselten Verbindung (Tunnel) zum erfindungsgemäßen Server
- Übermittlung der gewonnenen Daten. (minimal: Name des Client, Checksumme des Client, Checksumme der Systemroutine selbst, gewünschter Verbindungsport)

Die Systemroutinen erhalten hiernach vom erfindungsgemäßen Server eine Statusmeldung, die den Aussagen "Zustimmung", "Ablehnung" oder "Bypass" - entsprechen, woraus die Systemroutinen ermitteln, wie die vom Client gewünschte Verbindung zu behandeln ist:
- "Ablehnung": Bei Erhalt einer Ablehnung übermittelt die Systemroutine dem Client eine Fehlermeldung, danach schließt die Systemroutine sich selbst. Es wird keine Netzwerkverbindung zu dem die Systemroutinen aufrufenden Client hergestellt.
- "Zustimmung": Bei Zustimmung werden die vom Client kommenden Daten durch den Tunnel an den erfindungsgemäßen Server weitergeleitet. Vom erfindungsgemäßen Server durch den Tunnel kommende Antworten werden an den Client weitergeleitet.
- "Bypass": Bei "Bypass" werden die vom Client kommenden Verbindungsversuche behandelt, als wären die erfindungsgemäß modifizierten Systemroutinen die Original-Systemroutinen des Betriebssystems. Alle Anfragen dieses Clients werden ohne Veränderung an die Original-Systemroutinen weitergeleitet. So werden die erfindungsgemäßen Systemroutinen umgangen und die Systemroutinen verhalten sich für diese Verbindung, als wären sie unmodifiziert.

Des weiteren überprüft die erfindungsgemäße Systemroutine, ob der Client die Anfragen direkt an die Systemroutine stellt, oder ob sich ein Programm (welches ein Trojaner eines Angreifers sein könnte) zwischen den Client und die erfindungsgemäßen Systemroutinen geschaltet hat. Ist dies der Fall, wird die erfindungsgemäße Systemroutine mit einer Fehlermeldung geschlossen, weil der mutmaßliche Trojaner die Anfragen des Clients verfälschen könnte.

### Der erfindungsgemäße Server

Der erfindungsgemäße Server ist ein abgesichertes Server- System, das dem Stand der Technik entsprechend systemintern so weit in seinen Diensten abgesichert ist, dass es als vertrauensvoller und vor Fremdzugriffen gesicherter Server angesehen werden kann.

Der erfindungsgemäße Server wird von der System routine angesprochen (siehe Beschreibung "Die Systemroutinen"). Erfindungsgemäß läuft auf dem erfindungsgemäßen Server eine Anwendung, welche Verbindungen von den erfindungsgemäßen Systemroutinen annimmt und Verbindungen zum Internet aufbauen kann. Es wird eine verschlüsselte gesicherte Verbindung zwischen der erfindungsgemäßen Systemroutine und dem erfindungsgemäßen Server aufgebaut (Tunnel). Für das hierzu verwendete Verfahren kann ein beliebiges als ausreichend sicher anerkanntes Verfahren verwendet werden (z.B. ssh).

Nach erfolgtem Aufbau des Tunnels bekommt der erfindungsgemäße Server die durch die erfindungsgemäße Systemroutine ermittelten Daten mitgeteilt (minimal: Name des Clients, Checksumme des Clients, Checksumme der erfindungsgemäß modifizierten Systemroutine, gewünschtes Verbindungsprotokoll).

Der erfindungsgemäße Server führt intern Tabellen, in denen Regeln für den Umgang mit den übermittelten Daten definiert werden. Minimal werden in diesen Tabellen gepflegt:
- Name des Clients
- Checksumme des Clients
- Adresse des die Verbindung aufbauenden Rechners
- Checksumme der Systemroutine auf dem die Verbindung aufbauenden Rechner
- erlaubte Ports des Clients

Um nun das Ziel zu erreichen, einen Rechner eines Anwenders gegen Angriffe und Datenspionage (siehe «Ziel») zu sichern, müssen die Tabellen minimal folgende Verhalten des erfindungsgemäßen Servers festlegen:
1) die übermittelte Checksumme des Clients muss mit der in der Tabelle gespeicherten Checksumme überein stimmen
2) die übermittelte Checksumme der Systemroutine muss mit der in der Tabelle geführten Checksumme überein stimmen
3) der Client muss in der Tabelle geführt sein
4) das Protokoll muss für den Client zugelassen sein.

Ist eine der Überprüfungen 1) - 4) logisch falsch, so wird die Verbindung nicht zugelassen: Es wird den erfindungsgemäßen Systemroutinen eine "Ablehnung" übermittelt und der Tunnel geschlossen. In diesem Falle können Alarme für den Systemadministrator erzeugt werden, damit dieser Kenntnis von dem unautorisierten Verbindungsversuch erhält.

Optional ist es möglich, den erfindungsgemäßen Systemroutinen ein "Bypass" zu übermitteln. Dies hätte zur Folge, dass Netzintern ohne Überschreitung der Firewall uneingeschränkte Verbindungen aller (auch nicht verifizierte und autorisierter) Programme möglich wären. Die Regeln der Firewall könnten in diesem Falle auf Zulassen der Verbindungen des erfindungsgemäßen Servers beschränkt sein, so dass dieser der einzige Rechner ist, der mit anderen Rechnern im Internet Kontakt aufnehmen darf.

Sind alle Überprüfungen 1) - 4) logisch wahr, so wird die durch den Client angeforderte Verbindung durch den erfindungsgemäßen Server zugelassen.:Es wird den erfindungsgemäßen Systemroutinen eine "Zustimmung" übermittelt. Über den Tunnel übertragene Anfragen des Clients an Server im Internet werden vom erfindungsgemäßen Server an den entsprechenden Server im Internet weitergeleitet. Dies ist möglich, weil die Firewall alle Verbindungen vom erfindungsgemäßen Server ins Internet erlaubt. Vom Server aus dem Internet kommende Antworten werden wiederum über den Tunnel an die erfindungsgemäßen Systemroutinen weitergeleitet.

Somit wird der durch die erfindungsgemäßen Systemroutinen identifizierte Client vom erfindungsgemäßen Server verifiziert und gegebenenfalls autorisiert. Das Ergebnis (Zustimmung, Ablehnung oder Bypass) wird der erfindungsgemäßen Systemroutine über die verschlüsselte Verbindung mitgeteilt. Bei Zustimmung werden von der erfindungsgemäßen Systemroutine verschlüsselt übermittelte Anfragen des Clients entschlüsselt und anstelle des Clients durch den erfindungsgemäßen Server beim durch den Client angefragten Server im Internet gestellt. Von dort kommende Antworten werden über den Tunnel zurück an die erfindungsgemäße Systemroutine gesandt.

## Patentansprüche

1. Verfahren zum Einrichten eines Computer-Netzwerkes mit einem Host (1), wobei Netzwerkverbindungen der auf dem Host gestarteten Anwendungen (2) nur nach erfolgreicher Authorisierung der jeweiligen Anwendung, die Daten mit dem Internet austauschen will, erlaubt werden, **dadurch gekennzeichnet, dass**
- die für die Netzwerkverbindungen zuständige Original-Systemroutine (4) durch eine modifizierte Systemroutine (3) ersetzt wird;
- die Anwendung (2), um eine Netzwerkverbindung aufzubauen, auf die modifizierte Systemroutine (3) zugreifen muss;
- die modifizierte Systemroutine (3) die Identität der Anwendung (2) ermittelt, ihre Checksumme und die Checksumme der modifizierten Systemroutine erstellt und diese ermittelten Daten durch einen Server (6) gegen eine Positivliste prüfen lässt.

2. Verfahren nach Anspruch 1, **dadurch gekennzeichnet, dass** die Authorisierung gegen die Positivliste eine der folgende Ergebnisse zurückliefern kann: Zustimmung, Verbieten, Bypass.

3. Verfahren nach Anspruch 2, **dadurch gekennzeichnet, dass** im Falle der Antwort "Zustimmung" bei der Prüfung gegen die Positivliste, die durch die Anwendungen (2) ursprünglich an das Netzwerk zu übermittelnden Daten in weitere Pakete des verwendeten Netzwerkprotokolls eingepackt werden, und dann über eine tunnelnde Verbindung zum Server (6) weitergeleitet werden, im Falle von "Ablehnung" wird der Datenverkehr komplett unterbunden, im Falle von "Bypass" verhalten sich die modifizierten Systemroutinen (3) für den Datenverkehr so, als wären sie unmodifiziert.

4. - Verfahren nach Anspruch 1 bis 3, **dadurch gekennzeichnet, dass** zur Übermittlung der Daten zum Server (6) ein verschlüsselndes Übertragungsverfahren verwendet wird.

## Claims

1. A method for establishing a computer network with a host (1) wherein network connections from applications (2) started on the host will only be allowed following the successful authorization of said application which is attempting to exchange data with the Internet, **characterized by**:
- replacing the original system routine (4) responsible for network connections with a modified system routine;
- the application (2), which must access the modified system routine (3) in order to establish a network connection;
- the modified system routine (3) which determines the identity of the application (2), calculates its checksum, and via the server (6) checks these data against a whitelist.

2. A method according to claim 1, wherein the authorization against the whitelist can return one of the following results: approve, deny, bypass.

3. A method according to claim 2, wherein, in the case of the answer "approve" from the check against the whitelist, data originally to be transmitted on the network by the application (2) is packed into additional packets of the network protocol in use and redirected through a tunneled connection to the server (6); in the case of "deny", data traffic is completely prevented; in the case of the modified system routine (3) behaves for data traffic as if it were unmodified.

4. A method according to any of claims 1 to 3, wherein the transmission of data to the server (6) uses an encrypted transmission method.

## Revendications

1. Une méthode, pour établir un réseau informatique avec un serveur (1) dans laquelle les connexions réseau des applications (2) exécutées sur le serveur ne sont permises que suite à l'autorisation de la dite application qui tente d'échanger des données sur Internet, **caractérisée par** :
- Le remplacement de la méthode originale (4) d'accès au réseau par une méthode modifiée
- L'application (2), qui doit accéder à la méthode modifiée (3) afin d'établir la connexion réseau
- La méthode modifiée (3) qui détermine l'identification de l'application (2), calcule sa somme de contrôle (ou checksum), et via le serveur contrôle ces données par rapport à une liste blanche.

2. Une méthode conforme à l'assertion 1, dans laquelle l'autorisation vis-à-vis de la liste blanche retourne un des résultats suivants : « Approuver », « Refuser », « Ignorer »

3. Une méthode conforme à l'assertion 2, dans laquelle dans le cas d'une réponse « Approuver » en retour du contrôle vis-à-vis de la liste blanche, les données devant originellement être transmises sur le réseau par l'application (2) sont insérées dans des paquets additionnels du protocole réseau utilisé et redirigées à travers un tunnel de connexion vers le serveur (6) ; dans le cas « Refuser », le transfert de données est complètement bloqué ; dans le cas « Ignorer », la méthode modifiée (3) se comporte pour le transfert de données comme si elle ne l'était pas.

4. Une méthode conforme à l'une des assertions 1 à 3, dans laquelle la transmission des données vers le serveur (6) utilise une méthode de transmission cryptée.
